# EUROPEAN PATENT SPECIFICATION

(11) **EP 1 160 074 B1**
(45) Date of publication and mention of the grant of the patent: **23.07.2003**
(21) Application number: 01111247.1
(22) Date of filing: 15.05.2001
(51) Int. Cl.: B30B 5/02, B23Q 1/03, B29C 51/16

(54) **Device for positioninig workpieces in laminating presses**
Vorrichtung zum Positionieren von Werkstücken in Beschichtungspressen
Appareil pour positioner de pièces dans une presse à stratifier

(30) Priority: 18.05.2000 IT MI001108
(43) Date of publication of application: 05.12.2001
(73) Proprietor: Italpresse Engineering S.p.A., 24060 Bagnatica (Prov. of Bergamo) (IT)
(72) Inventor: Sala, Carlo., 24020 Ranica (IT)
(74) Representative: Modiano, Guido, Dr.-Ing.

(56) References cited:
- WO-A-01/08876
- DE-A- 19 611 754
- DE-U- 29 707 883
- US-A- 4 684 113

## Description

The present invention relates to a device for moving and positioning objects, such as panels for manufacturing furniture components or the like, to be laminated inside presses.

It is known that the lamination of panels, particularly objects such as panels for manufacturing furniture components, by means of a thin sheet of synthetic material, veneering or the like is generally performed by heating the lamination sheet and adhering it to the panel inside a press.

One press of this kind is disclosed in DE 297 07 883 U1.

In many cases the sheet is required to cover one of the larger faces of the panel and the lateral faces adjacent to said larger face.

For this requirement, the panels to be laminated are generally fed to the press by arranging them on a tray which supports the panel by means of a plurality of pins. More particularly, the panel is rested on a substantially horizontal plane on the tray and is supported by a plurality of pins which have a substantially vertical axis and make contact with its lower face, which constitutes one of the two larger faces of the panel and lies opposite the face to be laminated together with the lateral faces.

In order to allow the lamination sheet to cover completely the lateral faces, the pins with which the tray is provided can generally be arranged in two positions: a raised position, in which they make contact with the lower face of the panel, and a lowered position, in which they are spaced below the lower face of the panel. The pins that are fully covered by the panel are moved manually or mechanically into the raised position before or after depositing the panel on the tray, while the pins that are meant to be covered only partially or not at all by the panel are moved to the lowered position or retained thereat. In this manner, the panel rests on the pins arranged in the raised position with its lower face except for a region which is proximate to the edge of the panel, so that the sheet, as a consequence of the pressure applied by the press, optionally assisted by suction applied to the lower face of the sheet, can adhere to the upper face and to the lateral faces of the panels.

Trays are known which are provided with pins which engage, with a particular shape-mating, in appropriately provided seats which have a vertical axis and are formed in the tray. The coupling between the pin and the corresponding seat is such that depending on the rotational position of the pin about its own axis when it is inserted in the seat, the pin remains in the raised position or in the lowered position.

Trays are also known which have pins which can be placed individually in the raised position or in the lowered position by virtue of actuation systems of the pneumatic type which are accommodated in said tray.

Finally, trays are also known in which the arrangement of the pins in the raised or lowered position is achieved by means of moving parts of each pin, causing said moving parts to engage or disengage from corresponding abutments provided in the seat in which said pins are accommodated.

Currently commercially available trays suffer some drawbacks, particularly as regards the operation for placing the pins in the raised position or in the lowered position.

In known types of tray, this operation is in fact often slow and difficult to perform with sufficient reliability and precision in an automated manner.

Furthermore, in the case of trays in which the pins are actuated by a pneumatic system, the tray is considerably complex in structure thereby considerably increasing its production costs.

The aim of the present invention is to solve the above mentioned problems by providing a device for moving and positioning objects, such as panels for manufacturing furniture components or the like, to be laminated inside presses, of the type provided with a plurality of pins which are meant to support the object so as to allow to laminate one of its larger faces and the lateral faces that are adjacent to said larger face, which allows to simplify considerably the operations for placing the pins in the lowered position or in the raised position depending on the object that they must support.

Within this aim, an object of the invention is to provide a device which is highly reliable and precise in operation as regards the placing of the pins in the raised or lowered position.

Another object of the invention is to provide a device in which the operation for placing the pins in the raised or lowered position is particularly rapid both when it is performed manually and when it is performed mechanically.

Another object of the invention is to provide a device which is structurally simple and can be manufactured at a modest cost.

This aim and these and other objects which will become better apparent hereinafter are achieved by a device for moving and positioning objects, such as panels for manufacturing furniture components or the like, to be laminated inside presses, which comprises a tray which is arranged on a substantially horizontal plane and in which multiple seats are formed having a substantially vertical axis, each seat accommodating a pin which has a head which protrudes, with one of its ends, from the upper face of said tray; said pins forming, as a whole, with their heads, a supporting surface for the lower face of the object to be arranged in the press; said pins being individually movable on command along the axis of the corresponding seat in order to pass from a raised position, in which they are suitable to make contact with said object and support it, to a lowered position, in which they are spaced downward from the object; characterized in that it comprises, for each one of said pins, elastic means which cooperates with each pin and the corresponding seat to retain the pin in said raised position, said elastic means being flexible in order to allow the passage of the corresponding pin from the raised position to the lowered position or vice versa.

Further characteristics and advantages of the invention will become better apparent from the description of two preferred but not exclusive embodiments of the device according to the invention, illustrated only by way of non-limitative example in the accompanying drawings, wherein:
Figures 1 to 13 are views of the device according to the invention in a first embodiment, in which the pins have a variable useful length, and more specifically:
   Figure 1 is a partially sectional perspective view of a portion of the tray relative to a pin;
   Figure 2 is an exploded perspective view of a pin of the device according to the invention;
   Figure 3 is a top plan view of a portion of the tray with a plurality of pins;
   Figures 4 to 8 are sectional views of the tray, taken along a vertical plane, which illustrate the sequence for the automated actuation of the pins if said actuation is performed in an automated manner by acting on the lower end of the pins;
   Figures 9 and 10 are sectional views, taken similarly to Figures 4 to 8, of the arrangement of the tray inside the press;
   Figures 11 to 13 are sectional views of the tray, taken along a vertical plane, illustrating the actuation sequence of the pins and the positioning of the tray inside the press if said actuation is performed by acting on the upper end of the pins;
Figures 14 to 21 are views of the device according to the invention in a second embodiment, in which the pins have a fixed length, and more particularly:
   Figure 14 is a schematic sectional view, taken along a vertical plane, of a portion of the tray during the operation for actuating a pin to move it from the raised position to the lowered position;

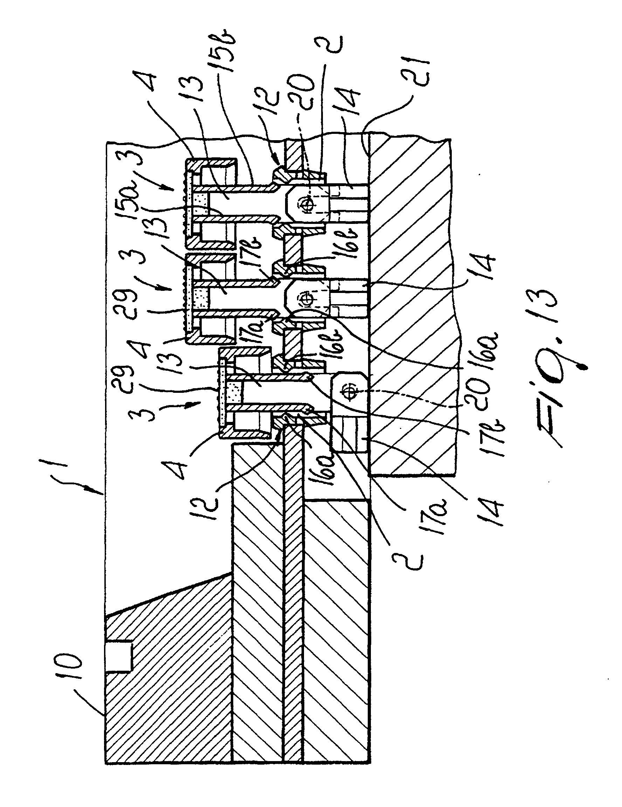

   Figure 15 is a schematic sectional view of Figure 14, taken along the plane XV-XV;
   Figure 16 is a sectional view, taken in a similar manner to Figure 14, of the operation for locking the pins in the set positions;
   Figure 17 is a schematic sectional view of Figure 16, taken along the plane XVII-XVII;

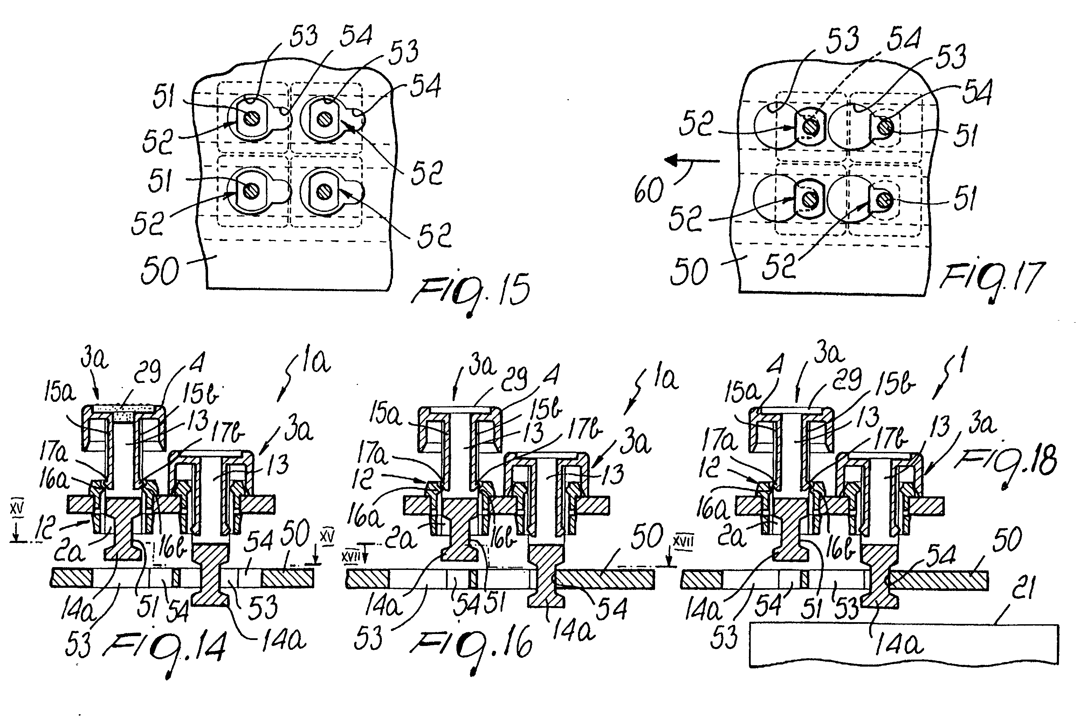

   Figure 18 is a sectional view, taken in a similar manner to Figures 14 and 16, of the insertion of the tray in the press;

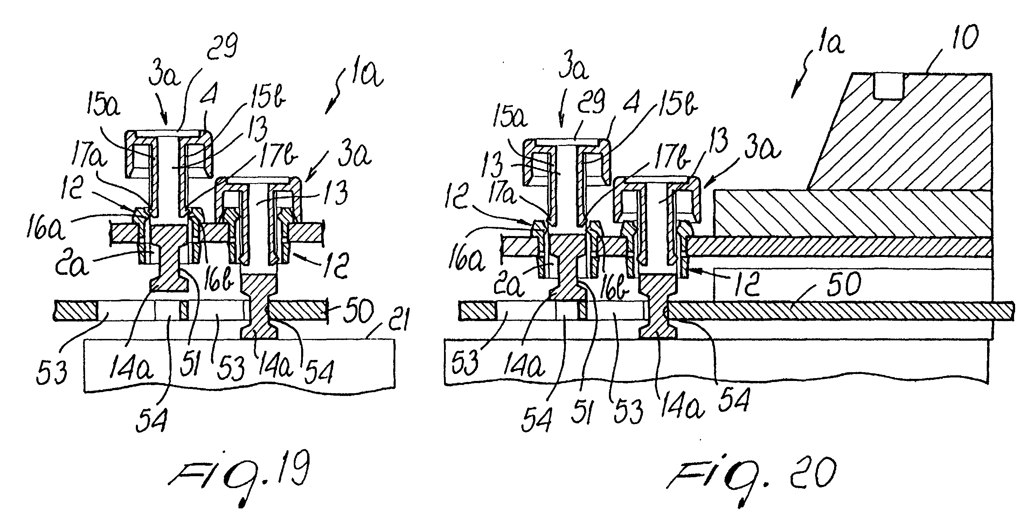

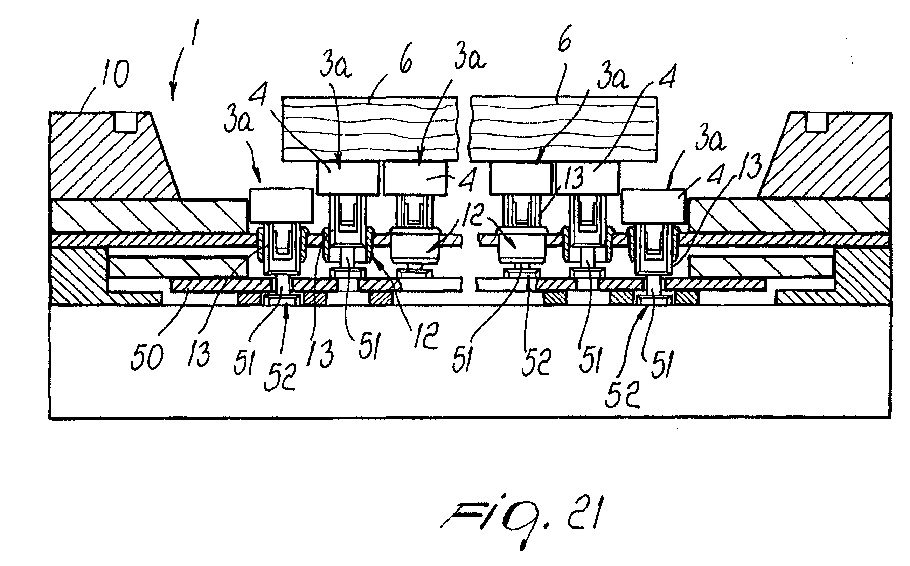

   Figures 19 and 20 are sectional views, taken in a similar manner to Figure 18, of the completion of the insertion of the tray in the press;
   Figure 21 is a sectional view of the tray inserted in the press, taken along a vertical plane which is perpendicular to the sectional plane of Figures 18 to 20.

With reference to the figures, the device according to the invention comprises, in its two embodiments, a tray 1, 1a which is arranged on a substantially horizontal plane and in which there are multiple seats 2, 2a which have a substantially vertical axis; each seat accommodates a pin 3, 3a which is provided with a head 4 which protrudes from the upper face of the tray 1, 1a.

Said pins 3, 3a form, as a whole, with their heads 4, a substantially horizontal supporting surface for the lower face of the object 6 to be supported and to be fed to a press, which is of a known type and is shown only partially in the figures. The pins 3, 3a can move individually on command along the axis of the corresponding seat 2, 2a in order to pass from a raised position, in which they are suitable to make contact with the object 6 and support it, to a lowered position, in which they are spaced downward from the object 6, as will become apparent hereinafter.

According to the invention, the device comprises, for each one of the pins 3, 3a, elastic means which cooperates with each pin 3, 3a and the corresponding seat 2, 2a in order to retain the pin 3, 3a in the raised position. Said elastic means is flexible in order to allow the transfer of the corresponding pin 3, 3a from the raised position to the lowered position or vice versa.

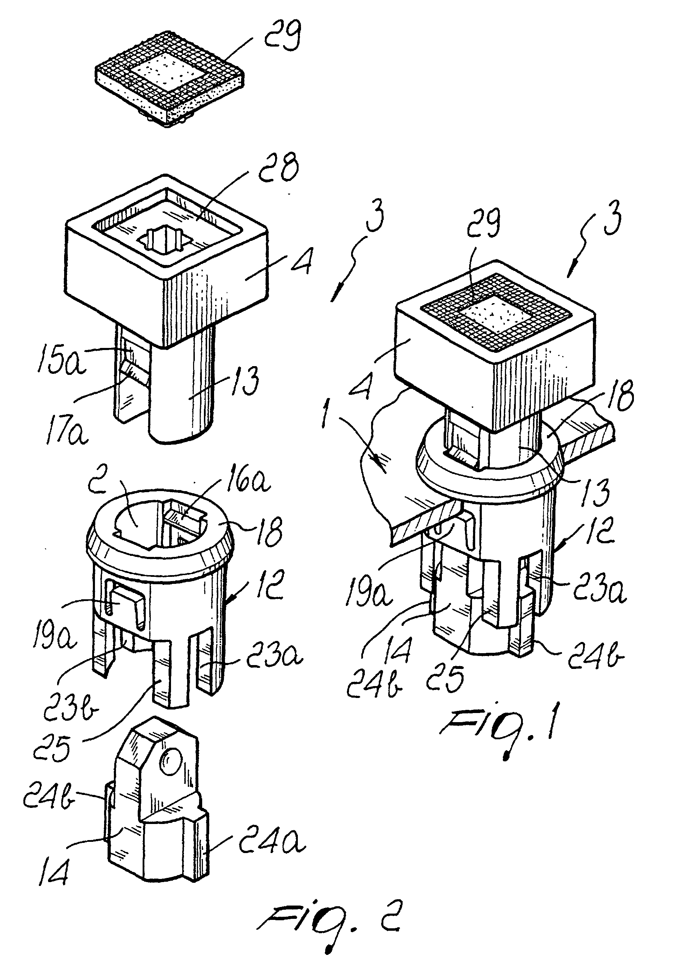

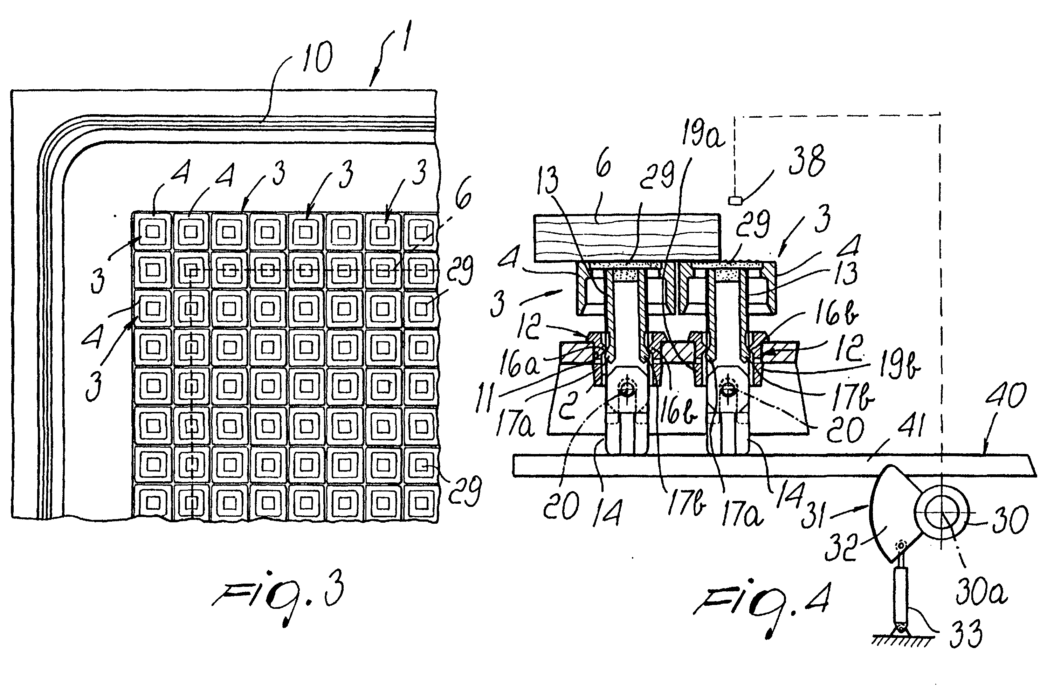

More particularly, the device in its first embodiment, shown in Figures 1 to 13, comprises a tray 1 which is arranged on a substantially horizontal plane and preferably has, proximate to its peripheral region, a raised edge 10.

Multiple holes 11 with a vertical axis are formed in the tray 1 and bushes 12 are locked therein; the seats 2 are formed inside said bushes.

Each pin 3 has a head 4 which protrudes upward from the seat 2, a stem 13 which has a smaller diameter than the head 4 and is slidingly accommodated along the axis of the corresponding seat 2, and a foot 14 which protrudes downward from the seat 2.

Said elastic means comprises at least one wing 15a, 15b which is associated with the stem of the pin 3 and can engage at least one abutment 16a, 16b which is provided on the lateral walls of the corresponding seat 2.

Preferably, the head 4 and the stem 13 are formed monolithically, preferably in molded synthetic material, and the wing 15a, 15b is constituted by a portion of the stem 13 which is elastically flexible toward or away from the axis of the stem 13 in order to move beyond the abutment 16a, 16b when the pin passes from the raised position to the lowered position or vice versa.

The wing 15a, 15b is connected to the remaining part of the stem 13 proximate to its upper end and has, proximate to its lower end, a tooth 17a, 17b which in the inactive condition, i.e., when the wing 15a, 15b is not actuated, protrudes from the lateral surface of the stem 13.

The abutment 16a, 16b is formed by a narrower region of the seat 2 at one of its portions facing the wing 15a, 15b. Said narrower region is constituted by a tooth which is provided on the lateral surface of the seat 2.

Preferably, instead of a single wing two wings 15a, 15b are provided which are arranged in two mutually diametrically opposite regions of the stem 13 and can flex toward or away from each other.

Correspondingly, inside the seat 2 two abutments 16a, 16b are provided which are located in two mutually diametrically opposite regions on the lateral surface of the seat 2 and are meant to be engaged by the teeth 17a, 17b of the wings 15a, 15b.

The seat 2 and the stem 13 are substantially cylindrical, preferably with a noncircular cross-section, in order to prevent rotation of the pins 3 about the relative axis with respect to the seat 2.

The bush 12, too, is preferably made of molded synthetic material and has, proximate to its upper end, a protruding edge 18 which rests on the upper face of the tray 1 when the bush 12 is inserted in the corresponding hole 11.

On the lateral surface of the bush 12, in a region which is spaced downward from the edge 18, there are two wings 19a and 19b which are elastically flexible and which, in the inactive condition, i.e., in the condition in which no force is applied, protrude from the lateral surface of the bush 12 and can flex elastically toward the axis of the bush 12 in order to pass through the hole 11 and engage with a snap action, as a consequence of their elastic reaction, the lower face of the tray 1, thus locking axially the bush 12 in the corresponding hole 11 of the tray 1.

In the first embodiment, the pin 3 has a variable useful length, since the foot 14 is articulated, about a substantially horizontal axis 20, with respect to the stem 13.

The foot 14 can rotate about the pivoting axis 20 with respect to the stem 13 in order to vary the useful axial length of the pin 3 from a pin extension position, in which the foot 14 is aligned with the stem 13, to a pin shortening position, in which the foot 14 protrudes laterally, preferably at right angles, to the stem 13.

The pin 3 is meant to rest, with its foot 14, in the pin shortening position if the pin is in the lowered position, or in the pin extension position if the pin is in the raised position, on the lower surface 21 of the press, as will become apparent hereinafter.

In the first embodiment a means is provided for contrasting the rotation of the foot 14 about the pivoting axis 20 with respect to the stem 13 when the pin is in the raised position, with the foot 14 in the pin extension position, i.e., aligned with the stem 13.

Said means for contrasting the rotation of the foot 14 about the pivoting axis 20 comprises two axial slots 23a, 23b which are formed in the lateral surface of the bush 12 and can be slidingly engaged by portions 24a, 24b of the foot 14 when the pin 3 is in the raised position. In this position, the portions 24a, 24b engage the axial slots 23a, 23b.

Furthermore, the bush 12 has, starting from its lower end, a lateral recess 25 to allow the rotation of the foot 14 about the axis 20 in passing from the pin extension position to the pin shortening position.

In the two embodiments, the pins 3 are aligned along parallel rows and are uniformly mutually spaced along the rows.

Preferably, the device according to the invention comprises selection means which acts on command individually on the pins 3 in order to move them from the raised position to the lowered position or vice versa.

Said selection means, as shown in particular in Figures 4 to 7, can comprise a supporting bar 30, which can be arranged below a row of pins 3 and is provided with an actuation element 31 for each pin 3 of a row of pins. Said actuation element 31 can be activated so as to interfere with the foot 14 of the overlying pin 3, which is supported, during selection, in a position which is intermediate between the lowered position and the raised position and so that the foot 14 is engaged with the means for contrasting the rotation of the foot 14 about the pivoting axis 20, if said means has been provided, so as to move the pin 3 into the raised position.

Each actuation element 31 can be constituted, as shown, by a cam-shaped profile 32 which is associated with the bar 30 so that it can rotate about its axis 30a. The bar 30 can be arranged in alignment with a row of pins 3, and each cam-shaped profile 32 can rotate about the axis 30a in order to pass from an inactive position, in which it does not interfere with the foot 14 of the pins 3, to an active position, in which it is raised with respect to the inactive position, so as to interfere with the foot 14 of a pin 3 to cause the lifting of the pin 3 when the bar 30 is moved with respect to the tray 1 along a horizontal direction which is perpendicular to the axis 30a, or vice versa.

The movement of the cam element 32 from the inactive position to the active position and vice versa can be achieved by way of a pneumatic actuator 33, an electromagnetic actuator, or other known kinds of actuator.

Alternatively, the selection of the pins 3 can also be performed from above, i.e., by acting on the head 4 of the pins 3, which during the selection operation are all preset in the raised position.

In this case it is possible to provide a bar which is similar to the bar 30 but can be arranged above the tray 1, and multiple actuation elements, one for each pin 3 of one row, can be provided on said bar and can be actuated in order to act on the head 4 of the corresponding pin 3, causing its transfer from the raised position to the lowered position. In this case, each actuation element can be constituted for example by a presser which can be actuated by means of a pneumatic or electromagnetic or mechanical actuator of a known type.

Advantageously, the device can comprise means 38 for detecting the profile of the object 6 arranged on the pins 3, and said detection means is operatively connected to the actuators of the selection means, so as to produce the actuation of said actuators according to the profile of the detected object 6, as will become apparent hereinafter.

The detection means 38 can be constituted by a proximity sensor, by a photocell, by a television camera or by another suitable known type of detection means.

The actuators of the selection means can also be operatively connected to a control element of the programmable electronic type, which stores the contour of the object 6 to be supported by means of the pins 3 and is adapted to individually control the actuators of the selection means according to the contour of the object 6 to be arranged on the pins 3 by moving to or keeping in the raised position the pins 3 that will be covered completely by the object 6, and moving to the lowered position those pins 3 that instead will be covered only partially or not at all by the object 6.

For the sake of completeness in description, it should be noted that in the head 4 of the pin 3 there is a seat 28 which accommodates a supporting pad 29, preferably made of elastically deformable material, in order to achieve soft support of the object 6 on the head 4, thus avoiding accidental movements of the object 6.

The operation of the device according to the invention, in its first embodiment, is as follows.

As already mentioned, the selection of the pins 3 to be moved from the raised position to the lowered position or vice versa can be achieved by way of actuation elements which are arranged below or above the tray 1. It should be noted that the selection operation performed above the tray 1 can also be performed manually instead of with actuation elements.

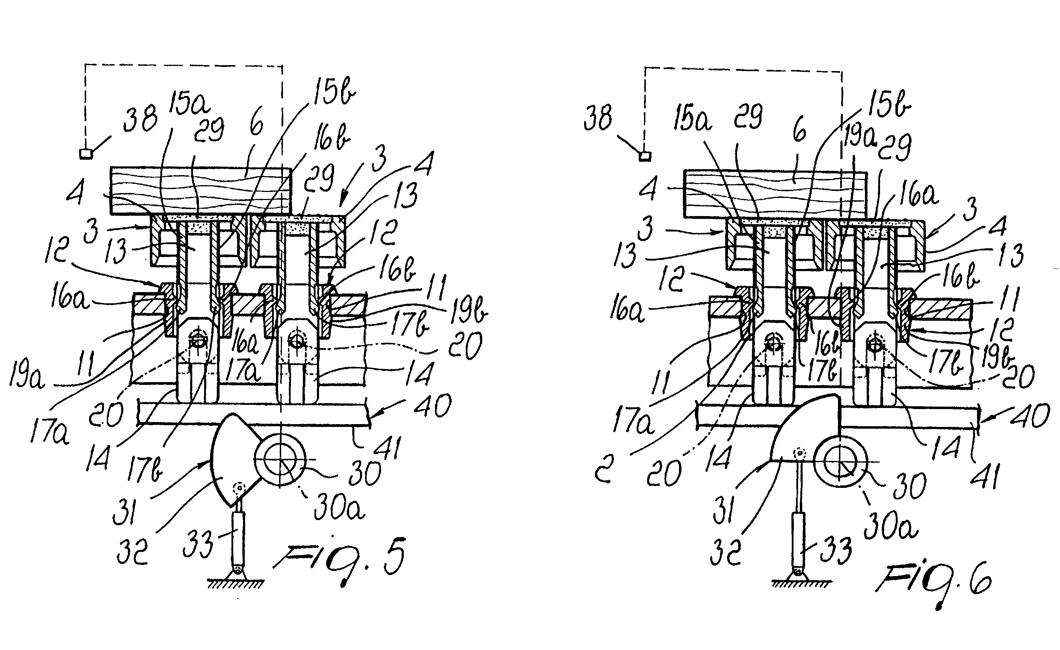

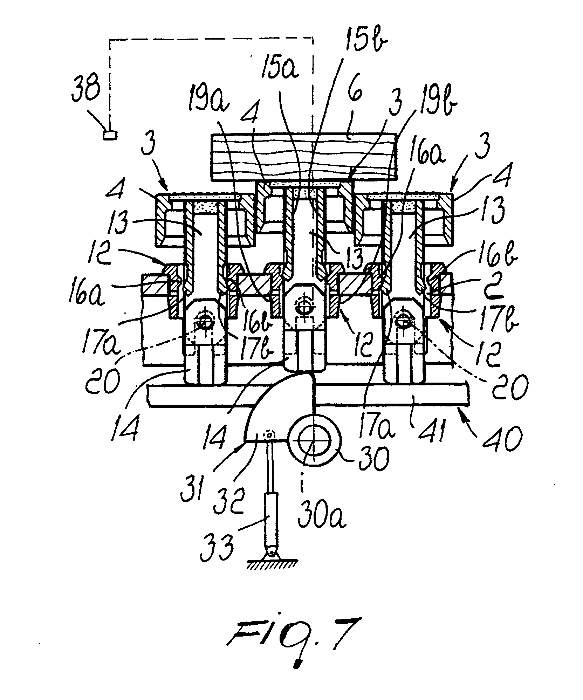

If actuation elements arranged below the tray 1 are used, as shown in Figures 4 to 10, the tray 1 is arranged beforehand in a selection station, in which the selection means is arranged, and all the pins 3 are moved beforehand into a position which is intermediate between the raised position and the lowered position so that the teeth 17a, 17b of the wings 15a, 15b are arranged below the abutments 16a, 16b and are moved and/or retained in this position, resting the foot 14 of the various pins 3 on a supporting surface 40 which is substantially horizontal. The supporting surface 40 has a plurality of slots 41 which are orientated at right angles to the axis 30a of the bar 30, and the number of said slots is equal to the number of pins 3 arranged in a same row. At each slot 41 there is an actuation element, preferably, a cam-shaped profile 32. The foot 14 of each pin 3 is arranged at a slot 41 and its dimensions are larger than the transverse dimensions of the corresponding slot 41. If the device is provided with means 38 for detecting the profile of the object 6, such as for example a panel, said panel 6 is deposited on the pins 3, which are in said intermediate position. Then the bar 30 is moved with respect to the tray 1 or vice versa at right angles to the axis 30a, i.e., parallel to the extension of the slots 41. The detection means gradually approaches the panel 6 and depending on whether it encounters or not the panel 6 during its motion with respect to said panel 6, it produces or not the activation of the actuation elements 31, which are constituted by the cam-shaped profiles 32, through the actuators 33, as shown in Figures 5 and 6. The cam-shaped profiles 32 connected to the actuators 33 that are actuated are made to protrude upward from the surface 40 and to interfere with the foot 14 of the corresponding pins 3. The movement of the bar 30 with respect to the tray 1 causes the transfer of the pins 3, which interfere with their foot 14 with the cam-shaped profile 32, into the raised position, moving the teeth 17a, 17b of the wings 15a, 15b above the abutments 16a, 16b, as shown in Figure 7.

Then the tray 1 is transferred into the press. During this translational motion, as the surface 40 is no longer present, the pins 3 that have not been moved into the raised position move to the lowered position by gravity, resting with their head 4 on the upper face of the tray 1, as shown in Figure 8.

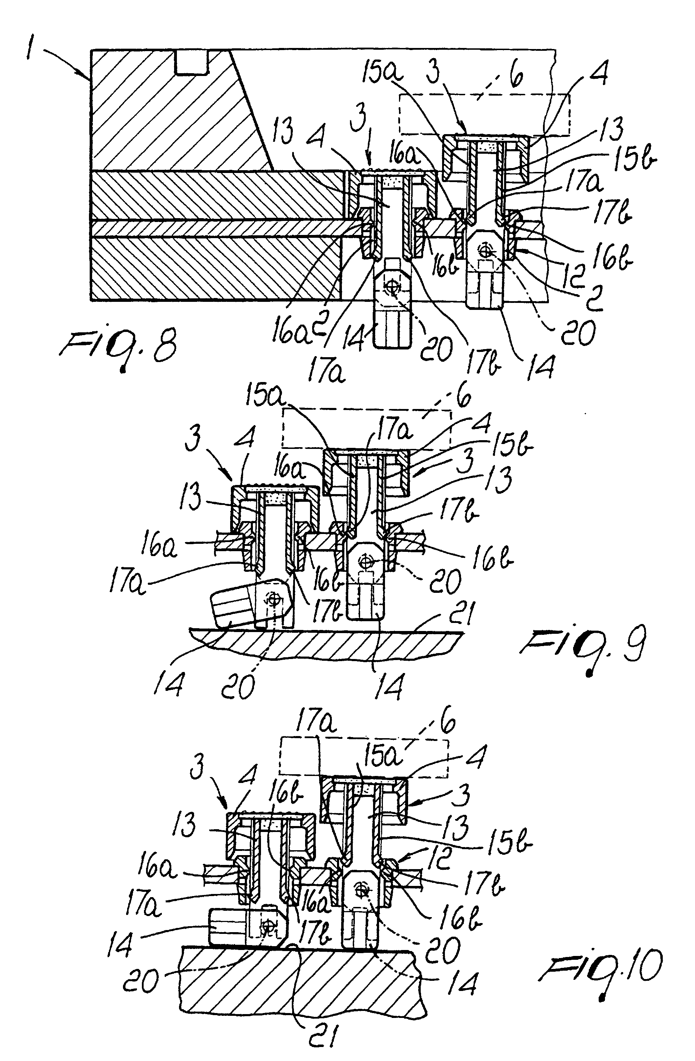

The vertical level of the tray 1, during insertion above the lower surface 21 of the press, is such that the lower surface 21 of the press lies above the lower end of the foot 14 of the pins 3 that are in the lowered position but below the lower end of the foot 14 of the pins 3 that have been moved into the raised position. As a consequence of this fact, the foot 14 of the pins that are in the lowered position rotates about the axis 20 with respect to the stem 13, as shown in Figure 9. Then the tray 1 is lowered slightly so as to rest the lower end of the foot 14 of the pins 3 in the raised position on the lower surface 21 of the press. It should be noted that this downward movement of the tray 1 causes the disengagement of the pins 3 from the abutments 16a and 16b of the corresponding seat 2, so that the pressure applied by the press to the panel 6 is not discharged onto the tray 1, as shown in Figure 10.

In this condition, the panel 6 is supported by the pins 3 that are in the raised position, which are spaced from the perimetric region of the panel 6, and therefore can be laminated on its upper face and on the lateral faces by the sheet that is inserted and heated inside the press, in a per se known manner.

If no means for detecting the contour of the panel are provided, the actuators 33 that actuate the cam-shaped profiles 32 can be actuated by a control element of the programmable electronic type which controls the actuators according to the stored contour of the panel 6, or other object, to be laminated. In this case, the panel 6 can be deposited on the pins 3 before or after the operation for selecting the pins 3, taking care to arrange the panel 6 on the tray 1 in a preset position which corresponds to the position of the tray set in the electronic control element.

At the end of the lamination operation, the tray 1, after the opening of the press, which is performed by spacing the upper surface of the press above the lower surface 21, is moved away from the press in order to allow the removal of the laminated panel 6. Then the tray 1 is moved below a horizontal surface which can move vertically and by means of which the pins 3 that were in the raised position are moved into the lowered position. At this point, the tray 1 is returned above the surface 40 and the operating cycle begins again as already described.

If the operation for selecting the pins 3 is performed manually or mechanically by acting on the head 4 of the pins 3, as shown in Figures 11 to 13, the tray 1 is arranged in the selection station with all the pins 3 in the raised position. The pin actuation elements, optionally controlled by a detector which detects the contour of the panel 6 deposited on the pins 3, cause the lowering of the pins 3 that are only partially covered, or are not covered at all, by the panel 6 deposited on the pins, as shown in Figure 11.

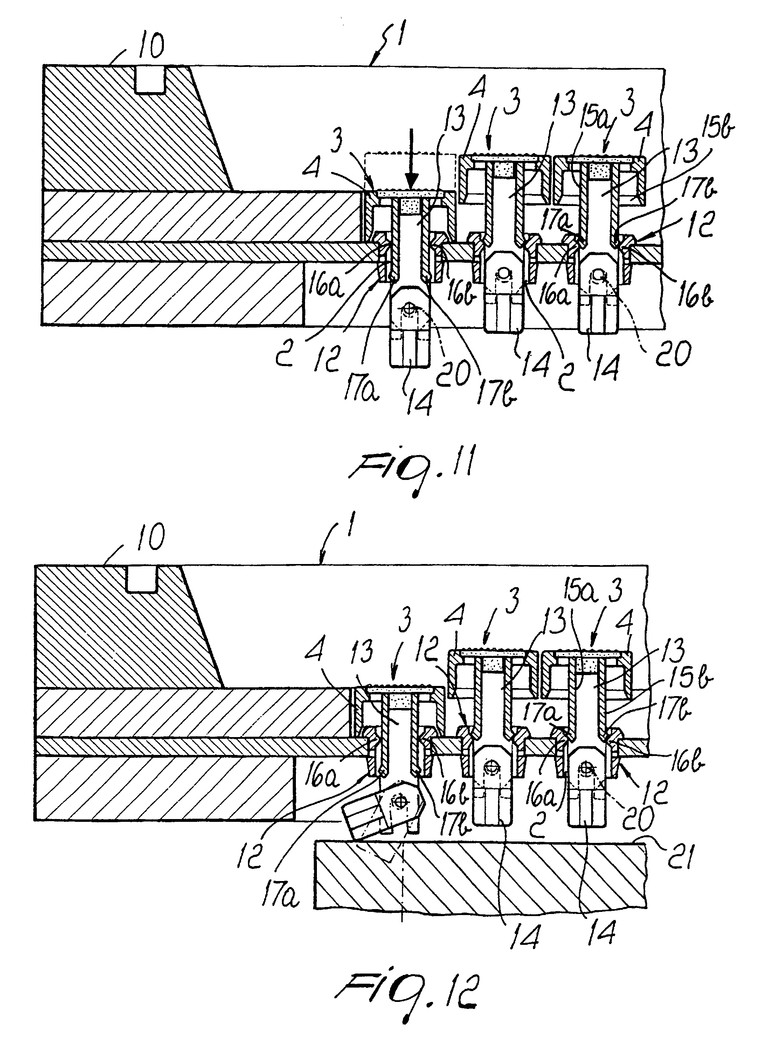

Then the tray 1 is inserted in the press, moving it to a vertical level which causes the foot 14 of the pins 3 that are in the lowered position to interfere against the lower surface 21 of the press. The translational motion of the tray 1 with respect to the lower surface 21 of the press causes the rotation of the feet 14 of the pins 3 into the lowered position, about the pivoting axis 20, moving the feet 14 into the pin shortening position, as shown in Figure 12. The tray 1 is then lowered slightly toward the lower surface of the press 21 until the lower end of the foot 14 of the pins that are in the raised position rests against the lower surface 21 of the press and said pins 3 are raised slightly with respect to the abutments 16a, 16b, as shown in Figure 13. At this point, the press is closed and laminates the panel 6 with the sheet inserted in the press.

At the end of the lamination operation, the press can be opened and, either directly in the press or in a subsequent processing station, after removing the panel 6, the tray 1 is raised above the lower surface 21 or another horizontal lower surface so as to return the feet 14 that are in the pin shortening position into the pin extension position; then said tray 1 is lowered toward the lower supporting surface so as to return all the pins 3 to the raised position, ready to undergo a new selection.

In this case also, the actuators that select the pins 3 can be controlled by a programmable electronic actuation element in which the contour of the panel 6 is preset, and the panel 6 can be deposited above the pins 3 after the selection operation or before the selection operation.

In the second embodiment, shown in Figures 14 to 21, the pins 3a, instead of having a variable useful length, have a fixed length, in that the foot 14a of the pins 3a, instead of being pivoted to the stem 13 of the pin 3a, is formed monolithically therewith or is rigidly connected to said stem 13.

The remaining part of the pin 3a, i.e., the stem 13 with the elastically flexible wings 15a, 15b, the head 4, and the bush 12 with the abutments 16a, 16b, can be provided substantially as already described with reference to the first embodiment. For this reason, the same reference numerals used in Figures 1 to 13 have been retained for these elements of the pins 3a.

Each pin 3a can be moved from a lowered position, in which it is arranged so that the teeth 17a, 17b lie below the abutments 16a, 16b of the bush 12, to a raised position, in which it is arranged so that the teeth 17a, 17b lie above the abutments 16a, 16b.

In this second embodiment locking means are provided which comprise a locking plate 50 which is associated in a downward region with respect to the tray 1a and is arranged on a substantially horizontal plane. Said locking plate 50 can be moved on command from an inactive position, in which it does not interfere with the axial movement of the pins 3a along the corresponding seat 2a, to an active position, in which it engages the foot 14a of the pins 3a that are in the lowered position and forms a lower support for the foot 14a of the pins 3a that are in the raised position, thus preventing the axial movement of the pins 3a along the corresponding seat 2a.

More particularly, the foot 14a of the pins 3a has, above its lower end, a region 51 which has a smaller diameter than the lower end. The locking plate 50 has, for each pin 3a, a contoured hole 52 which has a first region 53 whose dimensions are equal to, or greater than, those of the lower end of the foot 14a and a second region 54 whose dimensions are intermediate between those of the lower end of the foot 14a and those of the reduced-diameter region 51 of the pin. The first region 53 and the second region 54 are arranged sequentially along a substantially horizontal sliding direction 60 of the locking plate 50 with respect to the tray 1a in order to arrange the first region 53 in alignment with the corresponding pin 3a so as to allow the pin 3a to pass from the raised position to the lowered position, when the locking plate 50 is in the inactive position, and arrange the second region 54 in alignment with the corresponding pin 3a in order to support the pin 3a in the raised position or engage said reduced-diameter region 51 of the pin 3a, when the locking plate 50 is in the active position.

In practice, in this second embodiment the various pins 3a can be selected manually or mechanically by acting on the head 4 or on the foot 14a of the various pins and by starting the selection when the pins are in the lowered position, in the raised position or in an intermediate position, as already described, and when the panel 6 is already resting on the pins or when the panel 6 is to rest on the pins after the selection operation. During the selection operation, the holes 52 are arranged so that their region 53 is aligned with the corresponding pins 3a and therefore allow the free axial sliding of the pins 3a along the corresponding seat 2a, as shown in Figures 14 and 15. Once the selection operation has been performed, the locking plate 50 is actuated along the actuation direction 60 so as to move the region 54 into alignment with the pins 1a. This translational motion of the locking plate 50 makes the region 54 engage the reduced-diameter region 51 of the pins 3a that are in the lowered position and instead moves the region 54 of the holes 52 below the lower end of the foot 14a of the pins that are in the raised position and therefore can no longer pass through the hole 52, as shown in Figures 16 and 17. A certain vertical clearance can be provided between the locking plate 50 and the tray 1a so as to facilitate the sliding of the locking plate 50 along the direction 60 and so as to eliminate said clearance when the tray 1, together with the locking plate 50, is placed inside the press. In this condition, the pins 3a that are in the lowered position rest with their foot 14a on the lower surface 21 of the press, while the foot 14a of the pins that are in the raised position rests on the locking plate 50. In any case, the pressure applied by the upper surface of the press to the panel 6 is not discharged onto the tray 1a but onto the lower surface 21 of the press, as shown in Figures 20 and 21.

Once the panel 6 has been laminated, the locking plate 50 is moved again with respect to the tray 1a in the opposite direction with respect to the direction 60, so as to reposition the holes 52 with their portion 53 lying at the various pins 3a and the tray 1a can be lowered, outside the press, after optionally removing the panel 6, onto an adequate horizontal supporting surface provided with pins which protrude upward at the pins 3a, in order to return all the pins 3a to the raised position in case the selection must be performed on the pins in the raised position. If instead the selection operation must be performed starting with all the pins 3a in the lowered position, after releasing the pins 3a by virtue of the movement of the locking plate 50, as already described, the press can be closed again in order to move all the pins 3a to the lowered position.

Obviously, the lowering of the pins 3a can also be performed outside the press by virtue of a horizontal plane which can move vertically.

In practice it has been found that the device according to the invention fully achieves the intended aim in that by using elastic means which cooperate with the pins and the seat in which said pins are accommodated, it is possible to obtain in a simple and effective way the possibility to position said pins individually in the lowered position or in the raised position in order to support the object to be laminated or remain spaced downward from it.

This particular embodiment of the pins and of the seats in which they are inserted also allows to actuate the pins in a very simple manner both mechanically and manually.

The device thus conceived is susceptible of numerous modifications and variations, all of which are within the scope of the appended claims; all the details may furthermore be replaced with other technically equivalent elements.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for moving and positioning objects, particularly objects such as panels for manufacturing furniture components or the like, to be laminated inside presses, comprising a tray (1,1a) which is arranged on a substantially horizontal plane and in which there are multiple seats (2,2a) having a substantially vertical axis, each seat accommodating a pin (3,3a) which has a head (4) which protrudes, with one of its ends, from the upper face of said tray (1,1a); said pins (3,3a) forming, as a whole, with their heads (4), a supporting surface for the lower face of the object (6) to be arranged in the press; said pins (3,3a) being individually movable on command along the axis of the corresponding seat (2,2a) in order to pass from a raised position, in which they make contact with said object (6) and support it, to a lowered position, in which they are spaced downward from the object (6); **characterized in that** it comprises, for each one of said pins (3,3a), elastic means (15a,15b) which cooperates with each pin (3,3a) and the corresponding seat (2,2a) to retain the pin (3,3a) in said raised position, said elastic means being flexible in order to allow the passage of the corresponding pin (3,3a) from the raised position to the lowered position or vice versa.

2. The device according to claim 1, **characterized in that** each one of said pins (3,3a) has a head which protrudes upward from the corresponding seat (2,2a), a stem (13) which has a smaller diameter than said head (4) and is accommodated so that it can slide along the axis of the corresponding seat (2), and a foot (14) which protrudes downward from said seat (2).

3. The device according to claims 1 and 2, **characterized in that** said elastic means (15,15a) is fitted on the stem (13) of said pin (3,3a) and can engage at least one abutment (16a,16b) provided on the lateral walls of the corresponding seat (2).

4. The device according to one or more of the preceding claims, **characterized in that** said elastic means comprises at least one wing (15a,15b) which is associated with the stem (13) of said pin (3,3a) and protrudes laterally in order to engage said at least one abutment (16a,16b); said wing (15a,15b) being elastically flexible toward the axis of the pin (3,3a) in order to move beyond said abutment (16a,16b) when said pin is moved from said raised position to said lowered position or vice versa.

5. The device according to one or more of the preceding claims, **characterized in that** said at least one wing (15a,15b) is formed monolithically with said stem (13).

6. The device according to one or more of the preceding claims, **characterized in that** said at least one abutment (16a,16b) is formed by a narrower region of said seat (2) at said at least one wing (15a,15b).

7. The device according to one or more of the preceding claims, **characterized in that** said elastic means comprises two wings (15a,15b) which are associated with two mutually diametrically opposite lateral regions of the stem (13) of said pin (3), said wings (15a,15b) being elastically flexible toward the axis of the pin (3) in order to move beyond said at least one abutment when said pin (3) is moved from said raised position to said lowered position or vice versa.

8. The device according to one or more of the preceding claims, **characterized in that** the foot (14) of said pin (3) is rigidly associated with the remaining part of the pin (3).

9. The device according to one or more of the preceding claims, **characterized in that** it comprises means (19a,19b) for locking the axial sliding of the pins (3) along the corresponding seat (2) in said lowered position and/or in said raised position.

10. The device according to claim 9 **characterized in that** said locking means comprises a locking plate (50) which is associated below said tray (1a) and can move on command from an inactive position, in which it does not interfere with the axial movement of the pins (3) along the corresponding seat (2a), to an active position, in which it engages the foot (14a) of the pins (3a) in the lowered position and forms a lower support for the pins (3a) in the raised position, preventing the axial movement of the pins (3a) along the corresponding seat (2a).

11. The device according to claim 10, **characterized in that** the foot (14a) of said pins (3a) has, above its lower end, a region (51) which has a smaller diameter than said lower end, said locking plate (50) having, for each one of said pins (3a), a contoured hole (52) which has a first region (53) whose dimensions are equal to, or greater than, the dimensions of the lower end of said foot (14a) and a second region (54) whose dimensions are intermediate between the dimensions of the lower end of said foot (14a) and the dimensions of said reduced-diameter region (51) of the pin (3a); said first region (53) and said second region (54) of each contoured hole (52) being arranged sequentially along a substantially horizontal direction (60) in which said locking plate (50) slides with respect to said tray (1); said locking plate (50) being movable on command along said sliding direction (60) in order to pass from said inactive position, in which said first region (53) of each contoured hole (52) is aligned with the corresponding pin (3a) in order to allow the transfer of the pin (3a) from said raised position to said lowered position or vice versa, to said active position, in which said second region (54) of each contoured hole (52) is aligned with the corresponding pin (3a) in order to support the corresponding pin (3a) in said raised position or engage said reduced-diameter region (51) of the corresponding pin (3a) in said lowered position, or vice versa.

12. The device according to one or more of the preceding claims, **characterized in that** said foot (14) of the pin (3) is pivoted to the stem (13) of the pin (3) about a horizontal pivoting axis (20) and can rotate about said pivoting axis (20) in order to vary the useful axial length of the pin (3) from a pin extension position, in which the foot (14) is aligned with the stem (13) of the pin (3), to a pin shortening position, in which the foot (14) is rotated laterally to the stem (13) of the pin (3); said foot (14), when its pin (3) is in the lowered position, protruding downward from said tray (1) and being able to be contacted by the lower surface (21) of the press which turns the foot (14) of the pin (3) in the lowered position for its transfer from the pin extension position to the pin shortening position and forms a supporting surface for said foot (14) of the pin (3) in the pin extension position or in the pin shortening position depending on whether the pin (3) is in the raised position or in the lowered position.

13. The device according to claim 12 **characterized in that** it comprises means (23a,23b) for contrasting the rotation of said foot (14) about said pivoting axis (20) with respect to the stem (13) of the pin (3) when said pin (3) is in the raised position and its foot (14) is aligned with said stem (13).

14. The device according to claim 13 **characterized in that** said means for contrasting the rotation of said foot (14) about said pivoting axis (2a) comprises axial slots (23a,23b) which are formed in said seat (2), starting from its lower end, and can be engaged by portions (24a,24b) of said foot (14) when said pin (3) is in the raised position.

15. The device according to one or more of the preceding claims, **characterized in that** it comprises selection means (30) which acts on command individually on said pins (3) for their transfer from said raised position to said lowered position or vice versa.

16. The device according to one or more of the preceding claims, **characterized in that** said pins (3) are aligned along parallel rows and are uniformly mutually spaced along a same row.

17. The device according to claim 15 or 16 **characterized in that** said selection means comprises a supporting bar (30) which can be arranged above a row of pins (3); said bar (30) being provided with an actuation element (31) for each pin (3) of the row, which can be activated on command in order to interfere with the head (4) of the underlying pin (3), in the raised position, in order to produce its transfer from the raised position to the lowered position.

18. The device according to claim 15 or 16 **characterized in that** said selection means comprises a supporting bar (30) which can be arranged below a row of pins (3), said bar (30) being provided with a actuation element (31) for each pin (3) of the row, which can be activated in order to interfere with the foot (14) of the overlying pin (3), which is supported in a position which is intermediate between said lowered position and said raised position, and with said foot (14) engaged with said means (23a,23b) for contrasting the rotation of said foot (14) about said pivoting axis (20), in order to move said pin (3) into the raised position.

19. The device according to claim 17 or 18 **characterized in that** it comprises means (38) for detecting the profile of the object (6) deposited on said pins (3); said detection means (38) being operatively connected to said actuation elements (31) for the activation of the actuation elements at the pins (3) that are not covered, or are only partially covered, by said object (6).

20. The device according to claim 17 or 18 **characterized in that** it comprises means (38) for detecting the profile of the object deposited on said pins (3), said detection means (38) being operatively connected to said actuation elements (31) for the activation of the actuation elements (31) at the pins (3) that are fully covered by said object (6).

21. The device according to claims 17-20 **characterized in that** said actuation elements (31) are operatively connected to a control element of the electronic programmable type which stores the contour of said object (6) and is adapted to control said actuation elements (31) according to the contour of the object (6) to be arranged, or already arranged, on said pins (3).

## Patentansprüche

1. Vorrichtung zum Bewegen und Positionieren von Objekten, insbesondere Objekten wie in Pressen zu laminierenden Holzplatten für die Herstellung von Möbelteilen oder dergleichen, mit einem Ablegetisch (1, 1a), der auf einer im wesentlichen waagrechten Ebene angeordnet ist und in dem eine Vielzahl von Aufnahmen (2, 2a) mit einer im wesentlichen senkrechten Achse angeordnet ist, wobei jede Aufnahme einen Stift (3, 3a) mit einem Kopf (4) aufnimmt, der mit einem seiner Enden von der Oberseite des Ablegetischs (1, 1a) vorsteht, wobei die Stifte (3, 3a) insgesamt mit ihren Köpfen (4) eine Auflagefläche für die Unterseite des in der Presse anzuordnenden Objekts (6) bilden, wobei die Stifte (3, 3a) auf Befehl einzeln entlang der Achse der entsprechenden Aufnahme (2, 2a) bewegbar sind, um von einer angehobenen Position, in der sie mit dem besagten Objekt (6) in Kontakt stehen und es tragen, in eine abgesenkte Position zu kommen, in der sie vom Objekt (6) nach unten beabstandet sind, **dadurch gekennzeichnet, dass** sie für jeden der besagten Stifte (3, 3a) ein elastisches Mittel (15a, 15b) aufweist, das mit jedem Stift (3, 3a) und der entsprechenden Aufnahme (2, 2a) zusammenwirkt, um den Stift (3, 3a) in der angehobenen Position zu halten, wobei das besagte elastische Mittel flexibel ist, um den Übergang des entsprechendes Stifts (3, 3a) von der angehobenen Position in die abgesenkte Position und umgekehrt zu erlauben.

2. Vorrichtung nach Anspruch 1, **dadurch gekennzeichnet, dass** jeder der besagten Stifte (3, 3a) einen Kopf, der von der entsprechenden Aufnahme (2, 2a) nach oben vorsteht, einen Schaft (13), der einen kleineren Durchmesser als der besagte Kopf (4) und so aufgenommen ist, dass er entlang der Achse der entsprechenden Aufnahme (2) gleiten kann, und einen Fuß (14) aufweist, der von der besagten Aufnahme (2) nach unten vorsteht.

3. Vorrichtung nach den Ansprüchen 1 und 2, **dadurch gekennzeichnet, dass** das besagte elastische Mittel (15, 15a) am Schaft (13) des besagten Stifts (3, 3a) angebracht ist und mit wenigstens einem auf den Seitenwänden der entsprechenden Aufnahme (2) vorgesehenen Anschlag (16a, 16b) zusammenwirken kann.

4. Vorrichtung nach einem oder mehreren der vorhergehenden Ansprüche, **dadurch gekennzeichnet, dass** das besagte elastische Mittel wenigstens einen Flügel (15a, 15b) aufweist, der dem Schaft (13) des besagten Stifts (3, 3a) zugeordnet ist und seitlich vorsteht, um mit dem besagten wenigstens einem Anschlag (16a, 16b) zusammenzuwirken, wobei der besagte Flügel (15a, 15b) elastisch flexibel zur Achse des Stifts (3, 3a) hin ausgebildet ist, um sich über den besagten Anschlag (16a, 16b) hinaus zu bewegen, wenn der besagte Stift von der besagten angehobenen Position in die besagte abgesenkte Position und umgekehrt bewegt wird.

5. Vorrichtung nach einem oder mehreren der vorhergehenden Ansprüche, **dadurch gekennzeichnet, dass** der besagte wenigstens eine Flügel (15a, 15b) einstückig mit dem besagten Schaft (13) ausgebildet ist.

6. Vorrichtung nach einem oder mehreren der vorhergehenden Ansprüche, **dadurch gekennzeichnet, dass** der besagte wenigstens eine Anschlag (16a, 16b) durch einen schmaleren Bereich der besagten Aufnahme (2) an dem besagten wenigstens einen Flügel (15a, 15b) gebildet wird.

7. Vorrichtung nach einem oder mehreren der vorhergehenden Ansprüche, **dadurch gekennzeichnet, dass** das besagte elastische Mittel zwei Flügel (15a, 15b) aufweist, die zwei zueinander diametral entgegengesetzten Bereichen des Schafts (13) des besagten Stifts (3) zugeordnet sind, wobei die besagten Flügel (15a, 15b) elastisch flexibel zur Achse des Stifts (3) hin ausgebildet sind, um sich über den besagten wenigstens einen Anschlag hinaus zu bewegen, wenn der besagte Stift (3) von der besagten angehobenen Position in die besagte abgesenkte Position und umgekehrt bewegt wird.

8. Vorrichtung einem oder mehreren der vorhergehenden Ansprüche, **dadurch gekennzeichnet, dass** der Fuß (14) des besagten Stifts (3) fest mit dem restlichen Teil des Stifts (3) verbunden ist.

9. Vorrichtung nach einem oder mehreren der vorhergehenden Ansprüche, **dadurch gekennzeichnet, dass** sie ein Mittel (19a, 19b) zum Arretieren des axialen Gleitens des Stifts (3) entlang der entsprechenden Aufnahme (2) in der besagten abgesenkten und/oder angehobenen Position aufweist.

10. Vorrichtung nach Anspruch 9, **dadurch gekennzeichnet, dass** das besagte Arretiermittel eine Arretierplatte (50) aufweist, die unterhalb des besagten Ablegetischs (1a) angeordnet ist und sich auf Befehl aus einer inaktiven Stellung, in der sie die axiale Bewegung der Stifte (3) entlang der entsprechenden Aufnahme (2a) nicht behindert, in eine aktive Stellung, in der sie auf den Fuß (14a) der Stifte (3a) in der abgesenkten Position wirkt, bewegen kann und eine untere Abstützung für die Stifte (3a) in der angehobenen Position bildet, wodurch die axiale Bewegung der Stifte (3a) entlang der entsprechenden Aufnahme (2a) verhindert wird.

11. Vorrichtung nach Anspruch 10, **dadurch gekennzeichnet, dass** der Fuß (14a) der besagten Stifte (3a) oberhalb seinem unteren Ende einen Bereich (51) aufweist, der einen kleineren Durchmesser hat als das besagte untere Ende, wobei die besagte Arretierplatte (50) für jeden der besagten Stifte (3a) mit einem konturierten Loch (52) versehen ist, das einen ersten Bereich (53), dessen Abmessungen gleich oder größer als die Abmessungen des unteren Endes des besagten Fußes (14a) sind, sowie einen zweiten Bereich (54) hat, dessen Abmessungen zwischen den Abmessungen des unteren Endes des besagten Fußes (14a) und den Abmessungen des besagten Bereichs (51) mit reduziertem Durchmesser des Stifts (3a) liegen, wobei der besagte erste Bereich (53) und der besagte zweite Bereich (54) jedes konturierten Lochs (52) aufeinanderfolgend entlang einer im wesentlichen waagrechten Richtung (60) angeordnet sind, in welcher die besagte Arretierplatte (50) mit Bezug auf den besagten Ablegetisch (1) gleitet, wobei die besagte Arretierplatte (50) auf Befehl entlang der besagten Gleitrichtung (60) bewegbar ist, um von der besagten inaktiven Position, in der der besagte erste Bereich (53) jedes konturierten Lochs (52) mit dem entsprechenden Stift (3a) ausgerichtet ist, um den Übergang des Stifts (3a) von der besagten angehobenen Position zu der besagten abgesenkten Position und umgekehrt zu erlauben, zu der besagten aktiven Position zu gelangen, in der der besagte zweite Bereich (54) jedes konturierten Lochs (52) mit dem entsprechenden Stift (3a) ausgerichtet ist, um den Stift (3a) in der besagten angehobenen Position zu halten oder mit dem besagten Bereich (51) mit reduziertem Durchmesser des entsprechenden Stifts (3a) in der besagten abgesenkten Position und umgekehrt zusammenwirken zu lassen.

12. Vorrichtung nach einem oder mehreren der vorhergehenden Ansprüche, **dadurch gekennzeichnet, dass** der besagte Fuß (14) des Stifts (3) drehbar um eine horizontale Schwenkachse (20) am Schaft (13) des Stifts (3) angelenkt ist und um die besagte Schwenkachse (20) drehen kann, um die nutzbare Axiallänge des Stifts (3) von einer Stiftverlängerungsposition, in der der Fuß (14) mit dem Schaft (13) ausgerichtet ist, zu einer Stiftverkürzungsposition zu variieren, in der der Fuß (14) seitlich zum Schaft (13) des Stifts (3) verdreht ist, wobei der besagte Fuß (14), wenn sein Stift (3) sich in der abgesenkten Position befindet, von dem besagten Ablegetisch (1) nach unten vorsteht und von der Unterfläche (21) der Presse kontaktiert werden kann, die den Fuß (14) des Stifts (3) in der abgesenkten Position für den Übergang von der Stiftverlängerungsposition zu der Stiftverkürzungsposition dreht und eine Auflagefläche für den besagten Fuß (14) des Stifts (3) in der Stiftverlängerungsposition oder der Stiftverkürzungsposition bildet, je nachdem ob der stift (3) sich in der angehobenen oder der abgesenkten Position befindet.

13. Vorrichtung nach Anspruch 12, **dadurch gekennzeichnet, dass** sie ein Mittel (23a, 23b) zur Gegenwirkung gegen die Drehung des besagten Fußes (14) um die besagte Schwenkachse (20) mit Bezug auf den Schaft (13) des Stifts (3) aufweist, wenn der besagte Stift (3) sich in der angehobenen Position befindet und sein Fuß (14) mit dem besagten Schaft (13) ausgerichtet ist.

14. Vorrichtung nach Anspruch 13, **dadurch gekennzeichnet, dass** das Mittel zur Gegenwirkung gegen die Drehung des besagten Fußes (14) um die Schwenkachse (20) axiale Schlitze (23a, 23b) aufweist, die in der besagten Aufnahme (2) gebildet sind, beginnend von ihrem unteren Ende, und mit Bereichen (24a, 24b) des besagten Fußes (14) zusammenwirken können, wenn der besagte Stift (3) sich in der angehobenen Position befindet.

15. Vorrichtung nach einem der vorhergehenden Ansprüche, **dadurch gekennzeichnet, dass** sie ein Auswahlmittel (30) aufweist, das auf Befehl einzeln auf die besagten Stifte (3) für ihren Übergang von der besagten angehobenen Position zu der besagten abgesenkten Position und umgekehrt wirkt.

16. Vorrichtung nach einem der vorhergehenden Ansprüche, **dadurch gekennzeichnet, dass** die besagten Stifte (3) entlang parallelen Reihen ausgerichtet und entlang derselben Reihe gleichförmig voneinander beabstandet sind.

17. Vorrichtung nach Anspruch 15 oder 16, **dadurch gekennzeichnet, dass** das besagte Auswahlmittel eine Auflagestange (30) aufweist, die oberhalb einer Reihe von Stiften (3) angeordnet werden kann, wobei die besagte Stange (30) mit einem Betätigungselement (31) für jeden Stift (3) der Reihe versehen ist, das auf Befehl aktiviert werden kann, um mit dem Kopf (4) des darunter liegenden Stifts (3) in der angehobenen Position zusammenzuwirken, um dessen Übergang von der angehobenen zur abgesenkten Position zu bewirken.

18. Vorrichtung nach Anspruch 15 oder 16, **dadurch gekennzeichnet, dass** das besagte Auswahlmittel eine Stützstange (30) aufweist, die oberhalb einer Reihe von Stiften (3) angeordnet werden kann, wobei die besagte Stange (30) mit einem Betätigungselement (31) für jeden Stift (3) der Reihe versehen ist, das aktiviert werden kann, um mit dem Fuß (4) des darüber liegenden Stifts (3), der in einer Position gehalten ist, die zwischen der besagten abgesenkten und der besagten angehobenen Position liegt, zusammenzuwirken, und wobei der besagte Fuß (14) mit den besagten Mitteln (23a, 23b) zur Gegenwirkung gegen die Drehung des besagten Fußes (14) um die Schwenkachse (20) zusammenwirkt, um den besagten Stift (3) in die angehobene Position zu bewegen.

19. Vorrichtung nach Anspruch 17 oder 18, **dadurch gekennzeichnet, dass** sie ein Mittel (38) zum Erfassen des Profils des auf den besagten Stiften (3) abgelegten Objekts (6) aufweist, wobei das besagte Erfassungsmittel (38) betriebsmäßig mit den besagten Betätigungselementen (31) für die Aktivierung der Betätigungselemente an den Stiften (3) verbunden ist, die nicht oder nur teilweise von dem besagten Objekt (6) abgedeckt sind.

20. Vorrichtung nach Anspruch 17 oder 18, **dadurch gekennzeichnet, dass** sie ein Mittel (38) zum Erfassen des Profils des auf den besagten Stiften (3) abgelegten Objekts (6) aufweist, wobei das besagte Erfassungsmittel (38) betriebsmäßig mit den besagten Betätigungselementen (31) für die Aktivierung der Betätigungselemente an den Stiften (3) verbunden ist, die völlig von dem besagten Objekt (6) abgedeckt sind.

21. Vorrichtung nach den Ansprüchen 17 bis 20, **dadurch gekennzeichnet, dass** die besagten Betätigungselemente (31) betriebsmäßig mit einem Steuerelement des elektronisch programmierbaren Typs verbunden sind, das die Kontur des besagten Objekts (6) speichert und zum Steuern der besagten Betätigungselemente (31) entsprechend der Kontur des auf den besagten Stiften anzuordnenden oder bereits angeordneten Objekts (6) ausgebildet ist.

## Revendications

1. Dispositif pour déplacer et positionner des objets, en particulier des objets tels que des panneaux pour fabriquer des composants de meubles ou analogues, destinés à être stratifiés à l'intérieur de presses, comprenant un plateau (1, 1a) disposé sur un plan sensiblement horizontal et comportant de multiples logements (2, 2a) présentant un axe sensiblement vertical, chaque logement recevant une broche (3, 3a) munie d'une tête (4) laquelle fait saillie, par l'une de ses extrémités, depuis la face supérieure dudit plateau (1, 1a) ; lesdites broches (3, 3a) formant, comme un tout, avec leur tête (4), une surface de support pour la face inférieure de l'objet (6) qui doit être disposé dans la presse ; lesdites broches (3, 3a) étant déplaçables individuellement sur commande le long de l'axe du logement correspondant (2, 2a) afin de passer d'une position haute, dans laquelle elles sont en contact avec ledit objet (6) et le soutiennent, à une position basse dans laquelle elles sont espacées de l'objet (6) vers le bas **caractérisé en ce qu'**il comprend, pour chacune desdites broches (3, 3a) un moyen élastique (15a, 15b) qui coopère avec chaque broche (3, 3a) et le logement correspondant (2, 2a) pour retenir la broche (3, 3a) dans ladite position haute, ledit moyen élastique étant flexible afin de permettre le passage de la broche (3, 3a) correspondante depuis la position haute à la position basse ou vice-versa.

2. Dispositif selon la revendication 1, **caractérisé en ce que** chacune desdites broches (3, 3a) est munie d'une tête faisant saillie vers le haut depuis le logement correspondant (2, 2a), une tige (13) qui présente un diamètre inférieur à ladite tête (4) et est reçue de façon à coulisser le long de l'axe du logement correspondant (2), et un pied (14) en saillie vers le bas dudit logement (2).

3. Dispositif selon les revendications 1 et 2, **caractérisé en ce que** le moyen élastique (15, 15a) est fixé sur la tige (13) de ladite broche (3, 3a) et peut venir en engagement avec au moins une butée (16a, 16b) prévue sur les parois latérales du logement (2) correspondant.

4. Dispositif selon une ou plusieurs des revendications précédentes, **caractérisé en ce que** ledit moyen élastique comprend au moins une aile (15a, 15b) qui est associée à la tige (13) de ladite broche (3, 3a) et qui fait saillie latéralement, de façon à venir en engagement avec ladite au moins une butée (16a, 16b) ; ladite aile (15a, 15b) étant flexible élastiquement en direction de l'axe de la broche (3, 3a) de façon à se déplacer au-delà de ladite butée (16a, 16b) lorsque ladite broche est déplacée depuis la position haute à la position basse ou vice-versa.

5. Dispositif selon une ou plusieurs des revendications précédentes, **caractérisé en ce que** ladite au moins une aile (15a, 15b) est constituée de façon monolithe avec ladite tige (13).

6. Dispositif selon une ou plusieurs des revendications précédentes, **caractérisé en ce que** ladite au moins une butée (16a, 16b) est formée par une zone plus étroite dudit logement (2) au niveau de ladite au moins une aile (15a, 15b).

7. Dispositif selon une ou plusieurs revendications précédentes, **caractérisé en ce que** ledit moyen élastique comprend deux ailes (15a, 15b), lesquelles sont mutuellement associées à deux zones latérales diamétralement opposées de la tige (13) de ladite broche (3), lesdites ailes (15a, 15b) étant flexibles élastiquement en direction de l'axe de la broche (3) de façon à pouvoir se déplacer au-delà de ladite au moins une butée lorsque ladite broche (3) est déplacée depuis la position haute à la position basse ou vice-versa.

8. Dispositif selon une ou plusieurs des revendications précédentes, **caractérisé en ce que** le pied (14) de ladite broche (3) est associé de façon rigide à la partie restante de la broche (3).

9. Dispositif selon une ou plusieurs des revendications précédentes, **caractérisé en ce qu'**il comprend un moyen (19a, 19b) pour bloquer le coulissement axial des broches (3) le long du logement correspondant (2) dans ladite position basse et/ou dans ladite position haute.

10. Dispositif selon la revendication 9, **caractérisé en ce que** ledit moyen de blocage comprend une plaque de blocage (50) qui est associée en dessous dudit plateau (1a) et peut se déplacer sur commande depuis une position de repos, dans laquelle elle n'interfère pas avec le mouvement axial des broches (3) le long du logement correspondant (2a), à une position de travail, dans laquelle elle vient en engagement avec le pied (14a) des broches (3a) dans la position basse et forme un support inférieur pour les broches (3a) dans la position haute, empêchant le mouvement axial des broches (3a) le long du logement correspondant (2a).

11. Dispositif selon la revendication 10, **caractérisé en ce que** le pied (14a) desdites broches (3a) présente, au-dessus de son extrémité inférieure, une zone (51) qui présente un diamètre inférieur à ladite extrémité inférieure, ladite plaque de blocage (50) présentant, pour chacune desdites broches (3a), un trou profilé (52) qui comporte une première zone (53) dont les dimensions sont égales, ou supérieures, aux dimensions de l'extrémité inférieure dudit pied (14a), et une deuxième zone (54) dont les dimensions sont comprises entre les dimensions de l'extrémité inférieure dudit pied (14a) et les dimensions de ladite zone de diamètre réduit (51) de la broche (3a) ; ladite première zone (53) et ladite deuxième zone (54) de chaque trou profilé (52) étant disposées de façon séquentielle selon une direction sensiblement horizontale (60) dans laquelle ladite plaque de blocage (50) glisse par rapport audit plateau (1) ; ladite plaque de blocage (50) étant déplaçable sur commande le long de ladite direction de glissement (60) afin de passer de ladite position de repos, dans laquelle ladite première zone (53) de chaque trou profilé (52) est alignée avec la broche correspondante (3a) afin de permettre le transfert la broche (3a) de ladite position haute à ladite position basse ou vice-versa, à ladite position de travail, dans laquelle ladite deuxième zone (54) de chaque trou profilé (52) est alignée avec la broche correspondante (3a) afin de soutenir la broche correspondante (3a) dans ladite position haute ou de venir en engagement avec ladite zone de diamètre réduit (51) de la broche correspondante (3a) dans ladite position basse, ou vice-versa.

12. Dispositif selon une ou plusieurs des revendications précédentes, **caractérisé en ce que** ledit pied (14) de la broche (3) peut pivoter sur la tige (13) de la broche (3) autour d'un axe de pivotement horizontal (20) et peut tourner autour dudit axe de pivotement (20) de façon à modifier la longueur axiale utile de la broche (3) depuis une position d'extension de la broche, dans laquelle le pied (14) est aligné avec la tige (13) de la broche, à une position de raccourcissement de la broche, dans laquelle le pied (14) est tourné latéralement par rapport à la tige (13) de la broche (3) ; ledit pied (14), quand sa broche (3) se trouve en position basse, faisant saillie vers le bas par rapport audit plateau (1) et étant en mesure d'être mis en contact avec la surface inférieure (21) de la presse qui fait tourner le pied (14) de la broche (3) dans la position basse pour son transfert depuis la position d'extension de la broche à la position de raccourcissement de la broche et forme une surface de soutien pour ledit pied (14) de la broche (3) dans la position d'extension de la broche ou dans la position de raccourcissement de la broche, selon que la broche (3) se trouve dans la position haute ou la position basse.

13. Dispositif selon la revendication 12, **caractérisé en ce qu'**il comprend un moyen (23a, 23b) pour contrarier la rotation dudit pied (14) autour dudit axe de pivotement (20) par rapport à la tige (13) de la broche (3) lorsque ladite broche (3) se trouve en position haute et que son pied (14) est aligné avec ladite tige (13).

14. Dispositif selon la revendication 13, **caractérisé en ce que** ledit moyen pour contrarier la rotation dudit pied (14) autour dudit axe de pivotement (2a) comprend des fentes axiales (23a, 23b) formées dans ledit logement (2), débutant au niveau de son extrémité inférieure, et peuvent venir en engagement de parties (24a, 24b) dudit pied (14) lorsque ladite broche (3) se trouve dans la position haute.

15. Dispositif selon une ou plusieurs des revendications précédentes, **caractérisé en ce qu'**il comprend un moyen de sélection (30) qui agit sur commande de façon individuelle sur lesdites broches (3) pour leur transfert depuis ladite position haute dans ladite position basse ou vice-versa.

16. Dispositif selon une ou plusieurs des revendications précédentes, **caractérisé en ce que** lesdites broches (3) sont alignées en rangées parallèles et sont espacées mutuellement de façon uniforme dans une même rangée.

17. Dispositif selon la revendication 15 ou 16, **caractérisé en ce que** ledit moyen de sélection comprend une barre de soutien (30) qui peut être disposée au-dessus d'une rangée de broches (3) ; ladite barre (30) étant munie d'un élément d'actionnement (31) pour chaque broche (3) de la rangée, qui peut être activé sur commande de façon à interférer avec la tête (4) de la broche (3) sous-jacente, dans la position haute, afin de provoquer son transfert depuis la position haute à la position basse.

18. Dispositif selon la revendication 15 ou 16, **caractérisé en ce que** ledit moyen de sélection comprend une barre de soutien (30) qui peut être disposée en dessous d'une rangée de broches (3), ladite barre (30) étant munie d'un élément d'actionnement (31) pour chaque broche (3) de la rangée, qui peut être activé afin d'interférer avec le pied (14) de la broche (3) sous-jacente, qui est maintenue dans une position intermédiaire située entre ladite position basse et ladite position haute, et avec ledit pied (14) en engagement avec ledit moyen (23a, 23b) pour contrarier la rotation dudit pied (14) autour dudit axe de pivotement (20), afin de déplacer ladite broche (3) pour l'amener dans la position haute.

19. Dispositif selon l'une des revendications 17 ou 18, **caractérisé en ce qu'**il comprend un moyen (38) pour détecter le profil de l'objet (6) déposé sur lesdites broches (3) ; ledit moyen de détection (38) étant opérativement relié audits éléments d'actionnement (31) pour l'activation des éléments d'actionnement (31) au niveau des broches (3) qui ne sont pas recouvertes, ou qui sont seulement partiellement recouvertes, par ledit objet (6).

20. Dispositif selon la revendication 17 ou 18, **caractérisé en ce qu'**il comprend un moyen (38) pour détecter le profil de l'objet déposé sur lesdites broches (3) ; ledit moyen de détection (38) étant opérativement relié audits éléments d'actionnement (31) pour l'activation des éléments d'actionnement (31) au niveau des broches (3) qui sont entièrement recouvertes par ledit objet (6).

21. Dispositif selon les revendications 17 à 20, **caractérisé en ce que** lesdits éléments d'actionnement (31) sont opérativement reliés à un élément de commande du type électronique programmable qui mémorise le contour dudit objet (6) et qui est apte à commander lesdits éléments d'actionnement (31) selon le contour de l'objet (6) à disposer, ou déjà disposé, sur lesdites broches (3).
